# FASCICULE DE BREVET EUROPEEN

(11) **EP 0 643 316 B1**
(45) Date de publication et mention de la délivrance du brevet: **14.01.1998**
(21) Numéro de dépôt: 94401991.8
(22) Date de dépôt: 07.09.1994
(51) Int. Cl.: G02C 1/04

(54) **Monture de lunettes**
Brillengestell
Spectacle frame

(30) Priorité: 09.09.1993 FR 9310722
(43) Date de publication de la demande: 15.03.1995
(73) Titulaire: ESSILOR INTERNATIONAL (Compagnie Générale d'Optique), F-94220 Charenton-le-Pont (FR)
(72) Inventeur: Danloup, André, F-94500 Champigny sur Marne (FR)
(74) Mandataire: CABINET BONNET-THIRION

(56) Documents cités:
- EP-A- 0 027 415
- DE-A- 3 718 794
- FR-A- 2 360 900
- FR-A- 2 504 694
- US-A- 2 516 549
- US-A- 4 842 399
- PATENT ABSTRACTS OF JAPAN vol. 5, no. 5 (P-044) 14 Janvier 1981 & JP-A-55 135 814

## Description

L'invention se rapporte à une monture de lunettes du type comportant, pour maintenir chaque verre, une arcade encore appelée "demi-cercle", relativement rigide, complétée par un fil tendu entre ses extrémités. L'invention concerne plus particulièrement un perfectionnement portant sur le rattachement entre le fil et l'arcade.

On connaît un type de monture de lunettes dont la partie rigide ou galerie ne comporte que deux arcades, supérieures ou inférieures, connectées de part et d'autre du pont nasal et auxquelles sont respectivement rattachées deux branches. Ces dernières sont connectées aux extrémités extérieures des arcades, par des tenons constituant le plus souvent des éléments de charnière. Chaque arcade est complétée par un fil, par exemple en nylon ou matériau synthétique analogue, raccordé à ses extrémités. Chaque verre, adapté au contour intérieur de l'arcade dans laquelle il s'encastre, comporte sur sensiblement la partie complémentaire de son périmètre, une fine gorge dans laquelle ledit fil, tendu, vient se loger.

Dans un tel type de monture, le fil peut être immobilisé par coincement entre deux trous voisins pratiqués à une extrémité de l'arcade correspondante. Un tel montage est de réglage difficile. On connaît du brevet FR 2 489 970 un autre montage où l'extrémité du fil est munie d'un élargissement logé et immobilisé dans une cavité de forme adaptée pratiquée à l'extrémité de l'arcade. Cette dernière doit donc être relativement massive pour que la cavité puisse y être pratiquée. Cette cavité est de forme relativement compliquée.

De plus, sur le plan esthétique, une monture de ce type est souvent plus élégante, toutes choses égales par ailleurs, si la galerie est particulièrement fine. Le rattachement du fil aux extrémités des arcades pose alors des problèmes particuliers.

D'autres montures à fil sont connues de JP-A-55-135 814, US-A-2 516 549 et FR-A-2 504 694.

Un premier objet de l'invention est de proposer un nouveau mode de fixation du fil compatible avec une monture de lunettes du type indiqué ci-dessus et comportant une galerie particulièrement fine.

L'invention a aussi pour objet de proposer un tel mode de fixation de l'extrémité du fil qui ne nécessite aucune pièce supplémentaire ou spécifique dans les éléments constitutifs de la galerie.

Plus précisément, l'invention concerne donc une monture de lunettes du type comportant, pour maintenir chaque verre, une arcade rigide complétée par un fil raccordé aux extrémités de ladite arcade, l'une de ces extrémités étant en outre fixée à un tenon de branche et ledit fil comportant un élargissement à l'une de ses extrémités, caractérisée en ce qu'une cavité est ménagée dans ledit tenon, en ce que cette cavité débouche du côté intérieur de ladite arcade par un orifice formant boutonnière comprenant une partie large et une partie étroite et en ce que ledit élargissement est engagé dans la cavité et retenu dans celle-ci par la partie étroite de la boutonnière.

Selon un mode de réalisation actuellement préféré, ladite cavité est un trou borgne pratiqué dans le tenon et l'extrémité de l'arcade est fixée au tenon de façon à recouvrir ce trou borgne. Ainsi, l'orifice formant boutonnière est défini par une découpe de forme correspondante pratiquée dans l'extrémité de ladite arcade. L'arcade est de préférence en métal. Elle peut par exemple avoir une section transversale incurvée, adaptée à recevoir le bord du verre. Comme mentionné précédemment, ledit élargissement peut être simplement constitué par un noeud du fil sur lui-même.

On entend par "boutonnière" une ouverture bien classique dans le domaine de la mécanique, comprenant, l'une à côté de l'autre, une partie large d'introduction dans laquelle on peut engager ledit élargissement du fil et une partie étroite contre laquelle ledit élargissement vient se bloquer.

L'invention sera mieux comprise et d'autres avantages de celle-ci apparaîtront plus clairement à la lumière de la description qui va suivre d'une monture de lunettes conforme à son principe, donnée uniquement à titre d'exemple et faite en référence aux dessins annexés dans lesquels:
- la figure 1 est une vue partielle en perspective d'une monture de lunettes selon l'invention; et
- la figure 2 est une coupe II-II de la figure 1.

Sur les dessins, on a représenté partiellement une monture de lunettes comprenant une galerie métallique 11 essentiellement constituée de deux arcades 12 connectées de part et d'autre d'un pont nasal (non visible sur les dessins). Chaque arcade a une section transversale incurvée conformée pour enserrer le bord d'un verre, lequel n'a pas été représenté pour ne pas surcharger le dessin. Chaque arcade 12 est complétée par un fil 13 raccordé aux extrémités libres de celle-ci. A l'extrémité de l'arcade située au voisinage du pont nasal, le fil est raccordé de façon classique. Il est par exemple immobilisé par coincement entre deux trous voisins pratiqués dans l'arcade au voisinage de cette extrémité. La partie extrême extérieure 15 de l'arcade 12 est fixée à un tenon 17, lequel forme un élément de charnière pour une branche de lunettes. Dans l'exemple, la galerie 11 et les tenons 17 sont en métal, la partie extrême de l'arcade étant soudée à une extrémité 20 du tenon. Par ailleurs, à un emplacement prédéterminé, le fil est pourvu d'un élargissement constitué ici par un noeud 19 du fil sur lui-même.

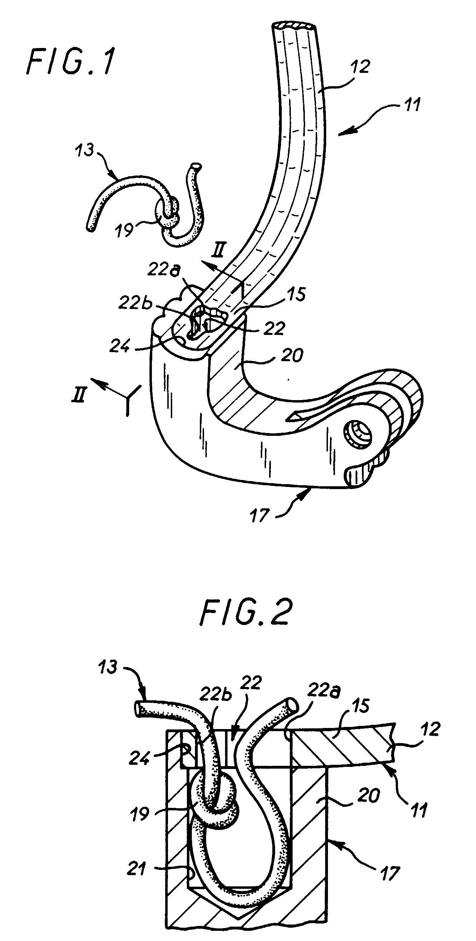

Selon une caractéristique importante de l'invention, une cavité 21 est ménagée dans le tenon à l'extrémité 20 de ce dernier. Elle s'ouvre vers l'intérieur de l'arcade 12 par un orifice 22 formant une boutonnière. L'élargissement du fil, c'est-à-dire ici le noeud 19, est engagé dans la cavité 21 et retenu dans celle-ci par la boutonnière. Plus précisément, ladite boutonnière comporte classiquement une partie large 22a, c'est-à-dire une ouverture suffisante pour permettre l'introduction du noeud 19 dans la cavité, et une partie étroite 22b, jouxtant la partie large, laissant passer le fil 13 mais retenant le noeud 19 dans la cavité 21. Dans l'exemple, cette dernière est un trou borgne (figure 2) pratiqué dans le tenon 20 tandis que la partie extrême 15 de l'arcade est fixée au tenon 17 de façon à recouvrir le trou borgne. L'orifice formant boutonnière est défini par une découpe de forme correspondante adaptée, pratiquée dans la partie extrême 15 de l'arcade, recouvrant l'orifice du trou borgne proprement dit. Dans l'exemple représenté, le tenon 17 comporte un épaulement 24 contre lequel l'extrémité de l'arcade vient en appui au moment de la soudure. Ce montage permet de positionner précisément la boutonnière en regard de l'orifice du trou borgne pratiqué dans le tenon.

Au montage, le fil est d'abord solidarisé à l'extrémité de l'arcade située au voisinage du pont nasal. Puis, le fil est noué sur lui-même de façon que le noeud 19 soit situé à une distance prédéterminée de cette première fixation. Cette distance dépend bien entendu de la forme et des dimensions du verre qui doit être immobilisé entre l'arcade et le fil. La partie terminale du fil, au-delà du noeud, est ensuite rabattue parallèlement au brin de fil de longueur prédéterminée et le noeud est introduit dans la cavité 21 et immobilisé dans celle-ci contre la face interne de la partie étroite 22b de la boutonnière. Le bout du fil émerge alors de la cavité par la partie large 22a de l'orifice formant boutonnière. Il est coupé, avant mise en place du verre, à quelques millimètres de cet orifice. La mise en place du verre masque complètement le bout du fil mais ce montage, clairement visible à la figure 2, facilite l'extraction du fil en cas de rupture.

## Revendications

1. Monture de lunettes du type comportant, pour maintenir chaque verre, une arcade (12) rigide complétée par un fil (13) raccordé aux extrémités de ladite arcade, l'une de ces extrémités étant en outre fixée à un tenon (17) de branche et ledit fil comportant un élargissement (19) à l'une de ses extrémités, caractérisée en ce qu'une cavité (21) est ménagée dans ledit tenon (17), en ce que cette cavité débouche du côté intérieur de ladite arcade (12) par un orifice (22) formant boutonnière comprenant une partie large (22a) et une partie étroite et en ce que ledit élargissement (19) est engagé dans la cavité et retenu dans celle-ci par la partie étroite de la boutonnière.

2. Monture de lunettes selon la revendication 1, caractérisée en ce que ladite cavité (21) est un trou borgne pratiqué dans ledit tenon (17), en ce que la partie extrême (15) de ladite arcade est fixée audit tenon de façon à recouvrir ledit trou borgne et en ce que ledit orifice (22) formant boutonnière est défini par une découpe de forme correspondante pratiquée dans ladite partie extrême de ladite arcade.

3. Monture de lunettes selon la revendication 1 ou 2, caractérisée en ce que ledit élargissement est un noeud (19) dudit fil sur lui-même.

4. Monture de lunettes selon l'une des revendications précédentes, caractérisée en ce que le bout dudit fil émerge de ladite cavité par ladite partie large (22a) dudit orifice formant boutonnière, facilitant l'extraction dudit fil.

## Patentansprüche

1. Brillengestell des Types umfassend zum Stützen eines jeden Glases eine steife Arkade (12), welche durch einen Faden oder Draht (13) ergänzt wird, verbunden mit den Enden der Arkade, wobei das eine der Enden des weiteren festgelegt ist an einem Bügelzapfen (17), wobei der Faden oder Draht eine Verbreiterung (19) an einem seiner Enden aufweist, dadurch gekennzeichnet, daß ein Hohlraum (21) in dem Zapfen (17) ausgebildet ist, und daß der Hohlraum an der Innenseite der Arkade (12) über eine Öffnung (22) mündet, welche ein Langloch bildet, umfassend einen breiten Abschnitt (22a) und einen schmalen Abschnitt und daß die Verbreiterung (19) in Eingriff steht mit dem Hohlraum und zurückgehalten ist in diesem über den schmalen Abschnitt des Langloches.

2. Brillengestell nach Anspruch 1, dadurch gekennzeichnet, daß der Hohlraum (21) ein Blindloch ist, ausgebildet in dem Zapfen (17) und daß der Endabschnitt (15) der Arkade an dem Zapfen befestigt ist, so daß das Blind- bzw. Sackloch bedeckt ist, und daß die Langloch-bildende Öffnung (22) definiert ist mittels einer Aussparung, die in entsprechender Form in dem Endabschnitt der Arkade ausgebildet ist.

3. Brillengestell nach Anspruch 1 oder 2, dadurch gekennzeichnet, daß die Verbreiterung ein Knoten (19) des Drahtes oder Fadens um sich selbst ist.

4. Brillengestell nach einem der vorangegangenen Ansprüche, dadurch gekennzeichnet, daß das Ende des Drahtes oder Fadens aus dem Hohlraum über den breiten Abschnitt (22a) der Langloch-bildenden Öffnung austritt, wodurch die Extraktion des Drahtes oder Fadens vereinfacht ist.

## Claims

1. A spectacles frame of the type comprising, for holding each lens, a rigid arch portion (12) completed by a thread (13) connected to the ends of said arch portion, one of said ends also being fixed to a side arm mounting portion (17) and said thread comprising an enlargement (19) at one of its ends, characterised in that a cavity (21) is provided in said side arm mounting portion (17), that said cavity opens at the inward side of said arch portion (12) by way of an opening (22) forming a buttonhole comprising a wide portion (22a) and a narrow portion, and that said enlargement (19) is engaged in the cavity and retained therein by the narrow portion of the buttonhole.

2. A spectacles frame according to claim 1 characterised in that said cavity (21) is a blind hole provided in said side arm mounting portion (17), that the end part (15) of the arch portion is fixed to said side arm mounting portion so as to cover said blind hole and that said buttonhole-forming opening (22) is defined by a cut-out of corresponding shape provided in said end part of said arch portion.

3. A spectacles frame according to claim 1 or claim 2 characterised in that said enlargement is a knot (19) of said thread on itself.

4. A spectacles frame according to one of the preceding claims characterised in that the end of said thread emerges from said cavity by said wide portion (22a) of said buttonhole-forming opening, facilitating extraction of said thread.
